# DEMANDE DE BREVET EUROPEEN

(11) **EP 0 588 696 A1**
(43) Date de publication de la demande: **23.03.1994**
(21) Numéro de dépôt: 93402203.9
(22) Date de dépôt: 10.09.1993
(51) Int. Cl.: G02F 1/35, H01S 3/10

(54) **Miroir à conjugaison de phase**

(30) Priorité: 18.09.1992 FR 9211145
(71) Demandeur: THOMSON-CSF, 75008 Paris (FR)
(72) Inventeur: Huignard, Jean-Pierre, F-92402 Courbevoie Cédex (FR); Dizier, Frédéric, F-92402 Courbevoie Cédex (FR)
(74) Mandataire: Guérin, Michel

(57) **Abrégé**

Ce miroir à conjugaison de phase comprend All moins un milieu non linéaire comportant également un système optique de focalisation (2) ayant au moins deux foyers (F₁, F₂) situés dans le milieu non linéaire (1) et permettant de focaliser la lumière en ces deux foyers.

## Description

L'invention concerne un miroir à conjugaison de phase et notamment un dispositif de génération, dans un milieu non linéaire d'une onde optique conjuguée en phase avec une onde incidente. Notamment le dispositif de l'invention vise à améliorer la qualité spatiale des faisceaux lasers par conjugaison de phase par exemple par conjugaison de phase Brillouin dans une cellule à gaz à haute pression. La configuration optique de l'invention assure une très bonne stabilité de la réflectivité de l'onde conjuguée et limite très efficacement les effets parasites tels que le claquage du milieu et l'autodéfocalisation des faisceaux.

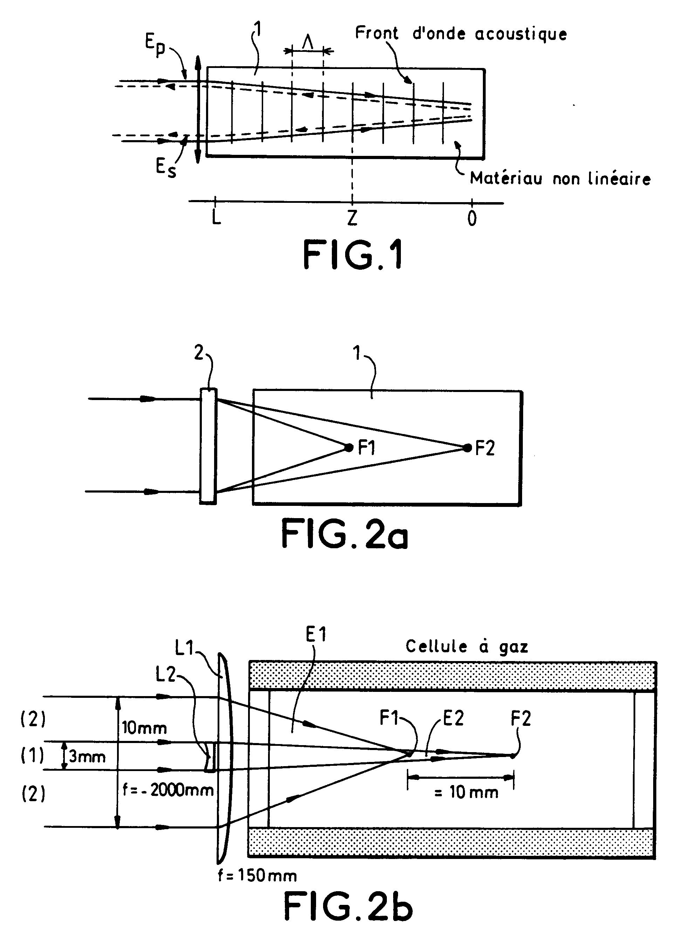

Dans la configuration classique présentée sur la figure 1, l'onde conjuguée s'obtient par focalisation de l'onde incidente dans une cellule 1 à gaz haute pression (CH₄, Xe, N₂...). Dans ces conditions, l'onde Ep induit un réseau d'indice dû à la propagation d'une onde acoustique générée par effet électrostrictif au niveau du foyer. L'onde rétrodiffractée Es par le réseau d'indice est alors la conjuguée en phase de l'onde incidente Ep. Dans une structure laser du type oscillateur-amplificateur, la conjugaison de phase permet la compensation dynamique des distorsions de phase dues à la lentille thermique du milieu amplificateur laser. Dans la pratique, la qualité et la stabilité de l'onde conjuguée sont limitées par plusieurs phénomènes qui entrent en compétition avec l'effet Brillouin :
- la défocalisation due à l'absorption résiduelle du faisceau dans la cellule,
- l'effet Raman,
- l'effet d'autofocalisation, dû au déplacement de matière par électrostriction autour du foyer.

Par ailleurs, l'origine du mécanisme étant le bruit de lumière diffusée par les phonons acoustiques du milieu, il est préférable d'initier le phénomène de rétrodiffusion Brillouin par un signal optique contrôlé. L'objet de l'invention est de satisfaire ce dernier point tout en diminuant les densités d'énergie au niveau du foyer. De ce fait, la contribution des effets non linéaires parasites est fortement réduite ce qui améliore très notablement la stabilité à long terme de la réflectivité et la fidélité de l'onde conjuguée.

L'invention concerne donc un dispositif à effet Brillouin comprenant au moins un milieu non linéaire caractérisé en ce qu'il comporte également un système optique de focalisation ayant au moins deux foyers situées dans le milieu non linéaire et permettant de focaliser de la lumière en ces deux foyers.

Les différents objets et caractéristiques de l'invention apparaitront plus clairement dans la description qui va suivre et dans les figures annexées qui représentent :
- la figure 1, une cellule à gaz à effet Brillouin fonctionnant en conjugaison de phase comme cela est connu dans la technique et déjà décrit précédemment ;
- la figure 2, un exemple général de réalisation de l'invention ;
- la figure 3, un exemple de réalisation détaillé du dispositif à effet Brillouin selon l'invention ;
- la figure 4, une illustration du fonctionnement du dispositif de la figure 2 ;
- les figures 5 à 6, des variantes de réalisation du dispositif de l'invention.

En se reportant à la figure 2, on va tout d'abord décrire un exemple de réalisation général de l'invention.

Ce dispositif comporte un milieu photosensible non linéaire 1 possédant une face d'entrée 10. Un faisceau optique Ep est transmis à la face d'entrée 10 par un système optique 2. Ce système optique permet de focaliser le faisceau optique en deux points F₁, F₂ situés à l'intérieur du milieu photosensible 1.

La figure 2b représente à titre d'exemple un mode de réalisation plus détaillé. Il inclut les composants suivants :
- un milieu non linéaire 1 tel qu'une cellule à gaz,
- une lentille L₁ de distance focale F₁ (= 150 mm par exemple),
- une lentille L₂ concentrique à la lentille L₁. La focale de l'ensemble L₁ + L₂ est telle que le point de focalisation se situe à F₁ + αF (αF = 10 mm). Sur la figure 2b, les deux lentilles L₁, L₂ sont séparées, mais elles pourraient être réalisées en une seule lentille bi-focale. Ce dispositif de focalisation fournit de très bonnes conditions de conjugaison de phase avec les performances suivantes :
- Réflectivité : 70-60 %,
- Energie incidente = 50-100mJ
- Cadence 30 Hz
- Absence de claquage du milieu gazeux

La stabilité des performances obtenues sur plusieurs heures peut être analysée de la façon suivante :

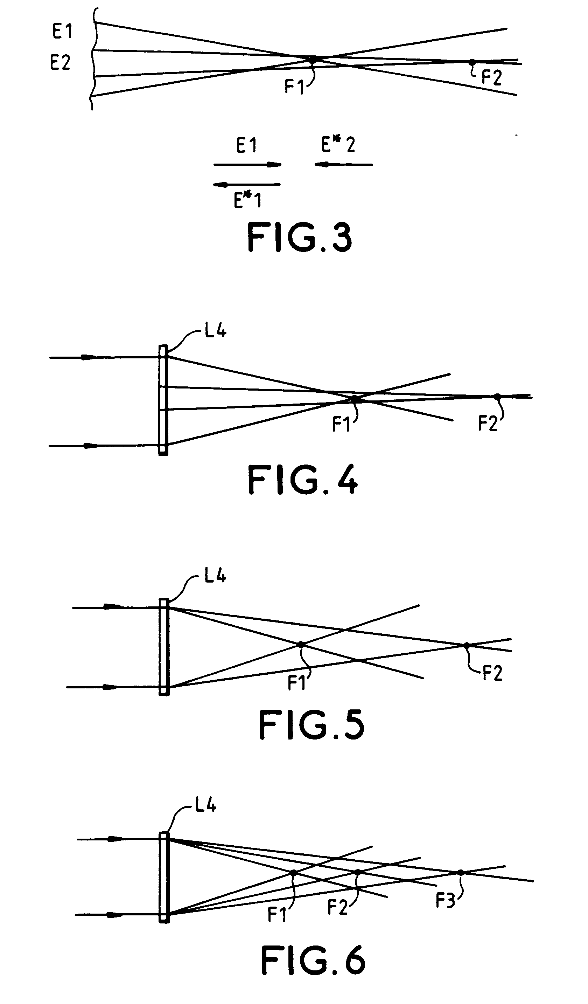

Le faisceau central F₂ qui contient 50-60% de l'énergie incidente génère un faisceau conjugué E*₂ autopompé qui constitue un faisceau sonde pour l'onde incidente F₁ extérieure à la lentille L₂. La zone de recouvrement des deux faisceaux E₁ et E*₂ autour du foyer F₁ peut être considéré comme une interaction du type 2 ondes (figures 3 et 4) contraprogatives. Cette interaction génère une onde conjuguée E*₁ dont les propriétés sont contrôlées par le faisceau sonde conjugué E₂*. Cette configuration fonctionne en partie comme une interaction de deux ondes, ce qui implique une réduction de l'énergie seuil par rapport à la structure autopompée ainsi qu'une plus grande stabilité de l'onde conjuguée ainsi générée. (sondage par injection).

Le dispositif de focalisation décrit ci-dessus peut être remplacé par une lentille holographique L₄ diffractant deux foyers F₁ et F₂ dont les positions géométriques sont déterminées par la configuration d'enregistrement (figures 4 et 5). (Enregistrement sur matériau photopolymère à haute efficacité). L'extension à la génération de N foyers multiples longitudinaux est indiquée sur la figure 6. En effet, un dispositif holographique L₄ permet l'enregistrement de plusieurs lentilles holographiques de points focaux F₁, F₂, F₃, etc... Un tel dispositif peut être réalisé avec tout autre technique de façon à obtenir à l'intérieur du milieu non linéaire 1 plusieurs points de focalisation du dispositif optique.

Dans ce qui précède on a indiqué à titre d'exemple que le milieu non linéaire est une cellule à gaz. Cependant, tout autre milieu non linéaire solide ou liquide peut convenir.

Notamment, un milieu non linéaire liquide tel que CS₂, du benzène ou du SnCl₄ est adapté à ce type de dispositif.

De même, on s'est appuyé dans ce qui précède sur l'effet Brillouin, cependant tout autre effet tel que l'effet Kerr par exemple générant une onde conjuguée en phase convient également.

## Revendications

1. Miroir à conjugaison de phase comprenant au moins un milieu non linéaire (1) caractérisé en ce qu'il comporte également un système optique de focalisation (2) ayant au moins deux foyers (F₁, F₂) situés dans le milieu non linéaire (1) et permettant de focaliser de la lumière en ces deux foyers.

2. Dispositif selon la revendication 1, caractérisé en ce que le milieu non linéaire (1) permet de générer par effet Brillouin, une onde conjuguée d'une onde incidente.

3. Dispositif selon la revendication 1, caractérisé en ce que le milieu non linéaire est une cellule à gaz.

4. Dispositif selon la revendication 1, caractérisé en ce que le milieu non linéaire est un milieu liquide.

5. Dispositif selon la revendication 4, caractérisé en ce que le milieu liquide est du CS₂, du SnCl₄ ou du benzène.

6. Dispositif selon la revendication 1, caractérisé en ce que le milieu non linéaire est un milieu solide.

7. Dispositif selon la revendication 1, caractérisé en ce que les foyers (F₁, F₂) sont alignés selon l'axe optique du système optique.

8. Dispositif selon la revendication 4, caractérisé en ce qu'il comporte plus de deux foyers.

9. Dispositif selon la revendication 4, caractérisé en ce que le dispositif optique comporte au moins deux lentilles concentriques.

10. Dispositif selon la revendication 4, caractérisé en ce que le dispositif optique comporte un dispositif holographique dans lequel a été enregistré au moins deux moyens de focalisation.
